(19) Europäisches Patentamt
European Patent Office
Office européen des brevets

(11) **EP 3 036 136 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **14748218.6**

(22) Anmeldetag: **08.08.2014**

(51) Int Cl.:
**B60T 13/66** *(2006.01)*  **B60T 13/68** *(2006.01)*
**B60T 13/74** *(2006.01)*  **B60T 7/04** *(2006.01)*
**B60T 8/32** *(2006.01)*

(86) Internationale Anmeldenummer:
**PCT/EP2014/067052**

(87) Internationale Veröffentlichungsnummer:
**WO 2015/024796 (26.02.2015 Gazette 2015/08)**

(54) **VERFAHREN UND VORRICHTUNG ZUR REGELUNG EINES BREMSSYSTEMS**

METHOD AND DEVICE FOR REGULATING A BRAKE SYSTEM

PROCÉDÉ ET DISPOSITIF DE RÉGULATION D'UN SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2013 DE 102013216329**

(43) Veröffentlichungstag der Anmeldung:
**29.06.2016 Patentblatt 2016/26**

(73) Patentinhaber: **Continental Teves AG & Co. OHG
60488 Frankfurt (DE)**

(72) Erfinder:
• BÖHM, Jürgen
  65558 Oberneisen (DE)
• ROLL, Georg
  60438 Frankfurt (DE)
• BESIER, Marco
  65307 Bad Schwalbach (DE)

(56) Entgegenhaltungen:
DE-A1-102011 076 675    DE-A1-102011 077 329
DE-A1-102012 200 705

**Beschreibung**

Die Erfindung betrifft ein Verfahren zur Regelung eines elektrohydraulischen Bremssystems für Kraftfahrzeuge, welches vorzugsweise in einer "Brake-by-wire"-Betriebsart ansteuerbar ist, mit einer mittels einer elektronischen Steuer- und Regeleinheit ansteuerbaren Druckbereitstellungseinrichtung, welche mit hydraulisch betätigbaren Radbremsen verbunden oder verbindbar ist und mittels welcher die Radbremsen über mindestens ein Druckregelventil hydraulisch betätigbar sind, wobei die Druckbereitstellungseinrichtung eine Zylinder-Kolben-Anordnung mit einem hydraulischen Druckraum umfasst, deren Kolben durch einen elektromechanischen Aktuator relativ zu einer Ruheposition verschiebbar ist, wobei für jede Radbremse ein Solldruckwert bestimmt ist, wobei die Zylinder-Kolben-Anordnung derart angesteuert wird, dass ein vorbestimmter Vordruck in dem hydraulischen Druckraum durch Verschiebung des Kolbens eingestellt wird, der aus den Solldruckwerten bestimmt wird, und wobei ein Vordruck-Istwert und ein Aktuatorgeschwindigkeit-Istwert ermittelt werden, ein Vordruck-Sollwert bestimmt wird und der Vordruck-Sollwert und der Vordruck-Istwert einer Reglervorrichtung als Eingangsgrößen zugeführt werden, welche einen Druckregler und einem dem Druckregler nachgeschalteten Geschwindigkeitsregler umfasst, wobei der Druckregler einen Aktuatorgeschwindigkeit-Sollwert ausgibt und dem Geschwindigkeitsregler als Eingangsgröße ein Aktuatorgeschwindigkeit-Sollwert und der Aktuatorgeschwindigkeit-Istwert zugeführt werden, und wobei der dem Geschwindigkeitsregler zugeführte Aktuatorgeschwindigkeit-Sollwert in Abhängigkeit von der Anzahl der Bremsen modifiziert wird. Sie betrifft weiterhin eine entsprechende Vorrichtung und ein Bremssystem.

Die "Brake-by-wire"-Betriebsart von Bremssystemen, insbesondere elektrohydraulischen Bremssystemen, führt zu einer mechanisch-hydraulischen Entkopplung der Betätigung des Bremspedals durch den Fahrer. Der Fahrer betätigt dabei einen Simulator bzw. eine Bremspedalgefühlsimulationseinrichtung, die ihm ein möglichst angenehmes und vertrautes Pedalgefühl vermittelt. Durch diese Betätigung wird aber nicht unmittelbar, wie in herkömmlichen hydraulischen Bremssystemen, Bremsflüssigkeit in die Bremskreise verschoben. Vielmehr wird während der Betätigung des Simulators der Bremswunsch des Fahrers bestimmt, der dann in die Bestimmung eines Sollbremsmomentes bzw. Sollbremsdruckes eingeht. Das tatsächliche Bremsen erfolgt dann durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. komfortabel verwirklichen.

In derartigen Bremssystemen ist gewöhnlich eine hydraulische Rückfallebene vorgesehen, in der der Fahrer das Fahrzeug durch Muskelkraft bei Betätigung des Bremspedals zum Stehen bringen kann, wenn die "by-wire"-Betriebsart ausfällt oder gestört ist. Während im Normalbetrieb durch eine Pedalentkopplungseinheit die oben beschriebene hydraulische Entkopplung zwischen Bremspedalbetätigung und Bremsdruckaufbau erfolgt, wird in der Rückfallebene diese Entkopplung aufgehoben, so dass der Fahrer direkt Bremsmittel in die Bremskreise verschieben kann.

Automatische Regelsysteme wie ABS, ESP, TCS sind aus modernen Kraftfahrzeugen nicht mehr wegzudenken und erhöhen die Sicherheit der Fahrzeuginsassen in hohem Maße. Sie greifen in der Regel dann ein, wenn eine instabile fahrdynamische Situation detektiert wird (Durchdrehen der Räder, Schleudern etc.) und überführen das Fahrzeug durch gezieltes Abbremsen und Freigeben einzelner Räder wieder in einen stabilen fahrdynamischen Zustand. Während bei konventionellen hydraulischen Bremssystemen, bei denen der gesamte Bremsdruck vom Fahrer durch Muskelkraft aufgebracht werden muss, diese Regelsysteme nur gezielt Bremsdruck verringern können und selbständig keinen höheren als den Fahrerdruck erzeugen können, sind aktive, insbesondere elektrohydraulische, Bremssysteme dafür ausgelegt, dass vom System her auch Druck selbständig bzw. aktiv erzeugt bzw. aufgebaut werden kann.

Bei Regelungsvorgängen wird dabei in einem Druckraum aktiv ein Vordruck aufgebaut. Vordruck bezeichnet hierbei den Druck im hydraulischen Druckraum, in dem der Druckkolben verschoben wird.

Ein Verfahren zur Regelung eines elektrohydraulischen Bremssystems, das insbesondere in der "Brake-by-wire"-Betriebsart betrieben werden kann, ist beispielsweise aus der DE 10 2011 076 675 A1 bekannt. Dort wird ein Bremssystem geregelt, welches Regelungsfunktionen wie ABS, TCS ASR etc. aufweist, wobei jedem Regelungsvorgang ein Skalierungsfaktor zugeordnet ist und jeweils der geringste dieser einzelnen Skalierungsfaktoren als aktueller Skalierungsfaktor verwendet wird. Durch die Berücksichtigung dieses Faktors wird ein - im Vergleich zur Normalbremsfunktion, bei der alle Radbremsen 100 hydraulisch mit dem Druckraum verbunden sind (so dass der Skalierungsfaktor 1 ist) - vorsichtiger Eingriff der Verstärkerdruckreglers vorgenommen, da die Solldrehzahl entsprechend der aktiven Regelfunktionen mit einem Skalierungsfaktor herunterskaliert wird und damit nicht so stark in den Regelkreis eingreift. Die Größe des Skalierungsfaktors und damit auch die Stärke der Reduktion der unskalierten Druckregelerstellgröße hängt davon ab, welche Bremsenregel- oder Assistenzfunktion aktiv ist.

Nachteilig bei einer derartigen Regelungsstrategie ist, dass durch die Wahl des jeweiligen Faktors die konkrete Bremssituation nur implizit und damit nicht sehr präzise erfasst wird. Es wird nämlich zwar prinzipiell berücksichtigt, dass radselektive Regeleingriffe vorgenommen werden, die einen abgeschwächten Eingriff des Druckreglers erfordern, allerdings wird nicht berücksichtigt, wie viele und welche Radbremsen nun tatsächlich hydraulisch mit dem Linearaktuator verbunden sind. Der Skalierungsfaktor beschreibt die aktuelle Situation also nur gewissermaßen im Mittel bzw. global.

Des Weiteren wird in der oben genannten Druckschrift alternativ oder in Kombination dazu vorgeschlagen, die Anzahl der Bremsen zu berücksichtigen, ohne dies weiter auszuführen.

Der Erfindung liegt daher die Aufgabe die Aufgabe zugrunde, ein oben beschriebenes Verfahren derart zu verbessern, dass die aktuelle Bremssituation sehr genau erfasst wird. Weiterhin sollen eine Vorrichtung zur Durchführung eines derartigen Verfahrens und ein elektrohydraulisches Bremssystem angegeben werden.

In Bezug auf das Verfahren wird diese Aufgabe erfindungsgemäß dadurch gelöst, dass diese Modifizierung in dessen Multiplikation mit einem Skalierungsfaktor besteht und der Skalierungsfaktor ausschließlich von der Anzahl der hydraulisch mit dem hydraulischen Druckraum verbundenen Bremsen abhängt.

Vorteilhafte Ausgestaltungen der Erfindung sind Gegenstand der Unteransprüche.

Die Erfindung geht von der Überlegung aus, dass bei der in der DE 10 2011 076 675 A1 vorgeschlagenen Regelungsstrategie mit konstanten Skalierungsfaktoren zwar durchaus berücksichtigt wird, dass radselektive Eingriffe erfolgen, die einen abgeschwächten Eingriff des Druckreglers erfordern. Es wird allerdings nicht berücksichtigt, wie viele und welche Radbremsen nun tatsächlich hydraulisch mit dem Linearaktuator verbunden sind, so dass der dort verwendete Skalierungsfaktor immer nur im Mittel das gewünschte Ergebnis liefert. Insbesondere im Fall einer ABS-Regelung, aber auch bei anderen Regelungsfunktionen, ergibt sich auf Grund der Ventilaktivitäten für den Druckregler eine sich ständig ändernde Regelstrecke.

Wie nunmehr erkannt wurde, führt nun eine explizite und ausschließliche Berücksichtigung der Zahl bzw. Anzahl der hydraulisch mit dem Druckraum bzw. der Vordruckkammer verbundenen Radbremsen bei der Berechnung des Skalierungsfaktors zu deutlichen Verbesserungen in der Regelgüte des Systemdruckreglers und damit auch in der Güte der Bremsung. Insbesondere im Falle einer ABS-Regelung, aber auch bei anderen Bremsregelungs- bzw. Bremsassistenzfunktionen, ergibt sich auf Grund der Ventilaktivitäten für den Druckregler eine sich ständig ändernde Regelstrecke, so dass eine Berücksichtigung der Anzahl der hydraulisch mit dem Druckraum verbundenen Bremsen bei der Berechnung des Skalierungsfaktors zu deutlichen Verbesserungen in der Regelgüte des Systemdruckreglers und damit auch in der Güte der Bremsung führt.

Dabei ist aber noch wichtig, in welchem Maße die einzelnen Bremsen in die Skalierung eingehen, d. h., wie ihr Beitrag jeweils in der Berechnung des Skalierungsfaktors gewichtet wird. Wie hierzu erkannt wurde, kann der Beitrag jeder Bremse in optimierter Weise bevorzugt dadurch erfasst werden, dass ihr Bremsmittelvolumen zur Erzeugung eines bestimmten Bremsdruckes als Beitrag verwendet wird. Vorteilhafterweise wird demnach bei der Bestimmung des Skalierungsfaktors der Volumenanteil der jeweiligen Bremse an einem Gesamtvolumen des Bremssystems berücksichtigt.

Der Volumenanteil der jeweiligen Bremse ist bevorzugt ein Radbremsenrelativvolumen, welches vorzugsweise berechnet bzw. ermittelt wird und dann als vorgegebener Wert verwendet wird. So kann beispielsweise den Vorderradbremsen ein jeweiliges Radbremsenrelativvolumen von jeweils 30 % und den beiden Hinterradbremsen jeweils ein Radbremsenrelativvolumen von 20 % zugeordnet werden, so dass sich für das Gesamtrelativvolumen aller Radbremsen in der Summe 100 % ergeben.

Das Verfahren wird vorteilhaft bei einem Bremssystem mit wenigstens einer Regelfunktion wie ABs, TCS, ASR, etc. eingesetzt. Derartige Regelungsvorgänge bedürfen regelmäßig der Bestimmung einer geeigneten Aktuatorgeschwindigkeit, um die Regeleingriffe möglichst präzise durchzuführen. Unter Aktuatorgeschwindigkeit wird die Drehung einer Welle, insbesondere der Welle eines Elektromotors des Aktuators oder einer damit gekoppelten, verbundenen und/oder angetriebenen Welle verstanden.

Zur Berücksichtigung der einzelnen momentan hydraulisch angeschlossenen Bremsen wird vorteilhafterweise ein Relativvolumen bestimmt als Summe von Radbremsenrelativvolumina der einzelnen Radbremsen, wobei das jeweilige Radbremsenrelativvolumen berechnet wird als Quotient des Radbremsenvolumens der jeweiligen Radbremse mit dem Gesamtvolumen multipliziert mit der Zahl 100, wenn diese Radbremse gerade hydraulisch verbunden ist und ansonsten Null ist, und wobei der Skalierungsfaktor eine Funktion dieses Relativvolumens ist.

Im Allgemeinen gilt für den Skalierungsfaktor $K_{Soll}$ die Ungleichung $0 < K_{Min} <= K_{Soll} <= 1.0$, wobei $K_{Min}$ ein minimaler Wert zwischen 0 und 1 ist. Im Folgenden wird, wie durch diese Ungleichung ausgedrückt, eine Reduktion oder Gleichbehaltung der Aktuatorsollgeschwindigkeit in Betracht gezogen, wobei der Wert $K_{Soll} = 1.0$ den Skalierungsfaktor repräsentiert, bei dem alle Radbremsen hydraulisch mit dem Druckraum verbunden sind, wie dies beispielsweise in der Normalbremsfunktion der Fall ist.

In einer bevorzugten Ausführungsform hängt der Skalierungsfaktor linear von dem Relativvolumen ab, d. h., das Relativvolumen geht linear in die Funktion ein.

Bevorzugt wird Skalierungsfaktor berechnet gemäß $K_{soll} = K_{min} + (1.0 - Kmin) * V_{rel, gesamt}/100$, wobei $V_{rel, gesamt}$ das Relativvolumen der hydraulisch mit dem Druckraum verbundenen Radbremsen bezeichnet. Da das Relativvolumen $V_{rel, gesamt}$ Werte zwischen 0 und 100 annimmt, ergibt sich für den Skalierungsfaktor ein linear von dem Relativvolumen abhängiger Wertebereich von $K_{min}$ bis 1.0.

Für den minimalen Skalierungsfaktor $K_{min}$ wird dabei vorzugsweise ein Wert zwischen 0.1 und 0.4, insbesondere der Wert 0.2 gewählt.

Auf Grund der Berechnungsmethode des Relativvolumens weist dieses keinen kontinuierlichen Zeitverlauf auf (es weist gewöhnlich immer dann Sprünge auf, wenn eine Radbremse hydraulisch dazu geschaltet oder getrennt wird). Wird nun der neu berechnete Skalierungsfaktor direkt zur Regelung verwendet, kann dies zu ruckartigen bzw. plötzlichen Sprüngen in der Aktuatorsollgeschwindigkeit führen und damit zu Störanregungen durch den Druckregler führen. Aus diesem Grund ist es vorteilhaft, den Verlauf des Skalierungsfaktors gewissermaßen zu dämpfen bzw. zu glätten.

Vorteilhafterweise wird daher der Skalierungsfaktor bzw. sein Wert nach seiner Neuberechnung nicht unmittelbar ersetzt, sondern der bisherige Skalierungsfaktor wird in Richtung des neu berechneten Skalierungsfaktors geändert, wobei die maximale Änderung des Skalierungsfaktors von der Differenz zwischen dem bisherigen Skalierungsfaktor und dem neu berechneten Skalierungsfaktor abhängt. Die Änderung in Richtung des neu berechneten Skalierungsfaktors bedeutet dabei, dass eine Differenz aus dem neuen Wert des Skalierungsfaktors und dem alten Wert des Skalierungsfaktors gebildet wird. In Abhängigkeit von der Größe dieser Differenz wird nun ein Änderungswert berechnet, der ein vorher festgelegter Wert oder eine Funktion der Differenz sein kann. Dieser Änderungswert hat das gleiche Vorzeichen wie die Differenz und wird dann zu dem bisherigen Skalierungsfaktor addiert, um den neuen Wert des aktuell gültigen Skalierungsfaktors zu erhalten. Dieser Vorgang wird zu jedem Abtastzeitpunkt wiederholt, bis der Zielwert des Skalierungsfaktors $K_{soll}$ erreicht ist. Vorteilhafterweise ist der Änderungswert vom Betrag her kleiner oder gleich groß der Differenz (ist er genau gleich groß, erfolgt keine Anstiegsbegrenzung und die Änderung wird direkt weitergegeben).

Zur Bestimmung des jeweiligen Radbremsenrelativvolumens wird vorzugsweise der Zustand des jeweiligen Einlassventils und/oder Aktuatorzuschaltventils berücksichtigt. Die Zustände dieser Ventile geben zeitgenau Auskunft darüber, ob die jeweilige Bremse momentan hydraulisch mit dem Druckraum verbunden ist oder nicht.

Die Bestimmung des Skalierungsfaktors erfolgt vorzugsweise in regelmäßigen zeitlichen Abständen, bevorzugt in Abständen zwischen 1 ms und 5 ms, insbesondere alle 2 ms. Bei derart kurzen Abtastintervallen kann auch bei einem hochdynamischen Regelvorgang, wie beispielsweise einer Vollbremsung oder einem Ausweichmanöver, der Skalierungsfaktor so schnell nachgefahren werden, dass eine präzise Einstellung des Sollbremsdruckes möglich ist.

In Bezug auf die Vorrichtung wird die oben genannte Aufgabe erfindungsgemäß gelöst mit Mitteln zur Ausführung eines oben beschriebenen Verfahrens. Dazu ist insbesondere eine elektronische Steuer- und Regeleinheit vorgesehen, welche bevorzugt wenigstens eine Regelschaltung umfasst, welche software- und/oder hardwaremäßig realisiert sein kann.

In Bezug auf das Bremssystem wird die oben genannte Aufgabe erfindungsgemäß gelöst mit einer derartigen Vorrichtung.

Die Vorteile der Erfindung liegen insbesondere darin, dass durch die Berücksichtigung der aktuell hydraulisch angeschlossenen Bremsen bei der Bestimmung des Skalierungsfaktors eine präzise und störanregungsunanfällige Ansteuerung des Aktuators ermöglicht wird. Durch eine Dämpfung des Skalierungsfaktors können hydraulische Störanregungen verringert werden.

Ein Ausführungsbeispiel der Erfindung wird anhand einer Zeichnung näher erläutert. Darin zeigen in stark schematisierter Darstellung:

FIG. 1 ein elektrohydraulisches Bremssystem mit einer Steuer- und Regeleinheit zur Durchführung des Verfahrens in einer bevorzugten Ausführungsform,

FIG. 2 ein Blockschaltbild einer Regelschaltung zur Durchführung einer Anzahl der Verfahrensschritte, und

FIG. 3 ein Blockschaltbild einer weiteren Regelschaltung zur Durchführung einer Anzahl der Verfahrensschritte.

Gleiche Teile sind in allen Figuren mit denselben Bezugszeichen versehen.

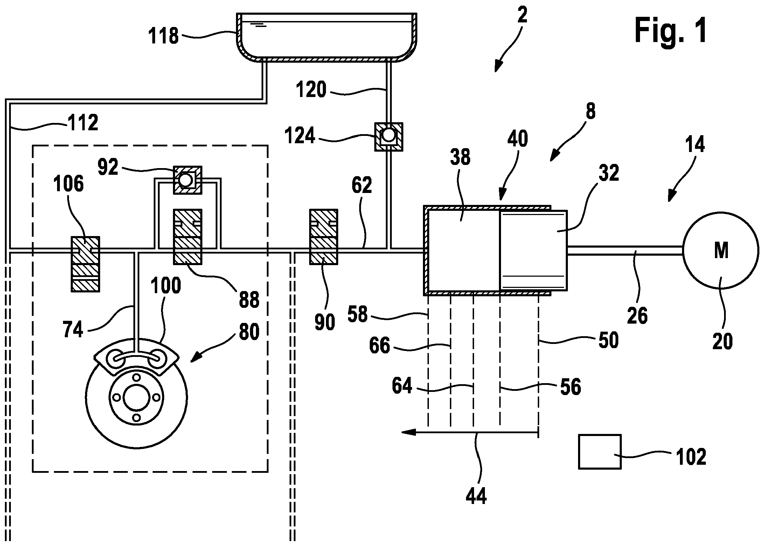

Ein in FIG. 1 dargestelltes aktives bzw. elektrohydraulisches Bremssystem 2 umfasst eine Druckbereitstellungseinrichtung 8, welche einen elektromechanischen Aktuator 14 umfasst. Der Aktuator 14 umfasst einen Elektromotor 20 und ein Getriebe 26 und verschiebt zum Druckaufbau einen Druckkolben 32 in einen hydraulischen Druckraum 38 in Druckaufbaurichtung 44. Durch den Druckkolben 32 und den Druckraum 38 ist eine Zylinder-Kolbenanordnung 40 realisiert. Der Druckkolben 32 fährt zum Druckaufbau beispielsweise von einer Ruheposition 50 in eine Druckposition 56, wodurch ein definiertes Druckmittelvolumen aus dem Druckraum 38 über eine Leitung 62, eine weitere Leitung 74 in einen Radbremskreis 80 geschoben, wo es durch ein geöffnetes Einlassventil 88 in eine Bremsleitung 94 und weiter in eine Radbremse 100 verschoben wird. Damit wird in der Radbremse 100 Druck aufgebaut. Weitere Druckpositionen 58, 64, 66 sind beispielhaft eingezeichnet. In der FIG. 1 ist nur ein Radbremskreis 80 dargestellt. Bei einem Kraftfahrzeug sind gewöhnlich vier Radbremskreise 80 vorgesehen, die jeweils über eine eigene Leitung 62 und ein in die jeweilige Leitung 62 geschaltetes Trennventil mit dem Druckraum 38 verbindbar sind. Jeder Radbremse 100 ist dann ein eigenes Ventilpaar 88, 106 zugeordnet. Eine elektronische Steuer- und Regeleinheit 102 dient zur Ansteuerung der oben beschrieben Komponenten. Über ein Aktuatorzuschaltventil 90 ist der Aktuator 14 hydraulisch mit dem Radbremskreis 80 verbindbar.

Ein Bremsdruckabbau kann erfolgen, indem der Druckkolben 32 wieder in Richtung seiner Ruheposition 50, also entgegengesetzt zur Druckaufbaurichtung 44, verschoben bzw. zurückgefahren wird. Ein schneller Bremsdruckabbau, wie er bei einem ABS-Regelvorgang benötigt wird, ist auch möglich, indem das Einlassventil 88, dem ein Rückschlagventil 92 parallel geschaltet ist, und ein Auslassventil 106 betätigt werden, wobei das Auslassventil 106 in eine Abfuhrleitung 112 geschaltet ist, durch die der Radbremskreis 80 bzw. die Bremse 100 mit einem Bremsflüssigkeitsbehälter 118 bzw. Reservoir verbunden ist. Zum Abbau des Bremsdruckes wird das Einlassventil 88 bzw. Druckregelventil geschlossen und das Auslassventil 106 für eine bestimmte Zeit geöffnet. Dadurch strömt Bremsflüssigkeit bzw. Druckmittel aus der Radbremse 100 über die Bremsleitung 94 in den Bremsflüssigkeitsbehälter 118. Diese Maßnahme des Druckabbaus ist dann sinnvoll, wenn der Druckraum 38 mehrere Radbremsen parallel bedient. In eine von der Leitung 62 abzweigende Leitung 120 ist ein Rückschlagventil 124.

Insbesondere beim radindividuellen Druckabbau über das in FIG. 1 dargestellte Ventilpaar 88, 106 wird Volumen aus der Druckkammer bzw. dem Druckraum 38 in den Bremsflüssigkeitsbehälter 118 entlassen, wodurch sich der Kolben 32 insbesondere während einer ABS-Bremsung allmählich in Richtung der Endposition 58 (Endanschlag) bewegt, so dass nach einigen Regelungszyklen kein weiterer Druckaufbau mehr möglich ist. Über die Leitung 120 und das Rückschlagventil 124 kann Flüssigkeitsvolumen aus dem Bremsflüssigkeitsbehälter 118 in den Druckraum 38 zurückgesaugt werden.

In alternativer Ausgestaltung des Bremssystems 2 kann der Druckraum 38 aus Sicherheitsgründen mehr-, insbesondere zweikreisig, ausgeführt sein mit mehreren Druckkammern bzw. Druckkolben, wobei die Druckkammern den Radkreisen bzw. Bremskreisen diagonal oder achsweise (Schwarz-weiß) zugeordnet sein können.

Die Notwendigkeit, einen vorgegebenen Systemdruck bzw. Systemdruckverlauf mittels eines Regelungsverfahrens einzustellen, ergibt sich immer dann, wenn der Fahrer durch Betätigung des Bremspedals einen allgemeinen Bremsdruck für alle Räder des Kraftfahrzeuges anfordert, oder wenn diese Druckanforderung durch eine Assistenzfunktion (ACC, HSA, HDC, etc.) gestellt wird, oder wenn eine spezielle radindividuelle Bremsregelfunktion aktiv wird, wie beispielsweise ABSs, TCS oder ESP.

Die Assistenzfunktionen fordern zumeist einen globalen Bremsdruck für alle Räder an, ähnlich wie bei einer durch den Fahrer mit Hilfe der mit dem Bremspedal ausgelösten Grundbremsung. In diesen Fällen wird der Druck bei geöffnetem Einlassventil 88 an allen Bremskreisen gleichermaßen durch Vorfahren des Tauchkolbens bzw. Druckkolbens 32 erzeugt. Die Antiblockierfunktion ABS begrenzt oder reduziert im Allgemeinen nur den vom Druckraum 38 aufgebrachten Druck für einzelne Räder, um diese in einem optimalen Bremsschlupf zu halten.

Bei der Traktionskontrolle TCS werden einzelne Räder, die auf Grund eines zu hohen Antriebmoments zum Durchdrehen neigen, gezielt abgebremst. Dazu muss das Bremssystem aktiv Druck in dem Druckraum 38 erzeugen, der nicht vom Fahrer angefordert wurde. Der Druck aus dem Druckraum 38 muss dann individuell über die jeweiligen Ventile 88, 106 in die jeweilige Radbremse 100 des zu bremsenden Rades geleitet werden, während die Bremskreise der anderen Räder, die ungeregelt bleiben, mit Hilfe ihrer Einlassventile 88 vom Druckraum 38 abgetrennt werden.

Ähnliches gilt für das elektronische Stabilitätsprogramm ESP. Hierbei werden Bremsdrücke ebenfalls aktiv und selektiv an einzelnen Rädern aufgebracht, um die Dynamik des Fahrzeuges um die Hochachse zu beeinflussen.

In all diesen Fällen gilt, dass der Vordruck in der Kammer bzw. dem Druckraum 38 so einzustellen ist, dass das Rad mit der höchsten Bremsruckanforderung zuverlässig mit dem notwendigen Bremsdruck versorgt werden kann. An einem Rad, welches weniger Bremsdruck benötigt als in der Vordruckkammer bzw. dem Druckraum 38 erzeugt wird, muss der Druck dadurch begrenzt werden, dass das dem Rad zugehörige Einlassventil 88 dauerhaft oder zeitweise geschlossen wird. Sollte das Rad dann einen geringeren Bremsdruck als den bereits eingestellten benötigen und ist der Vordruck höher als der gewünschte Raddruck, muss Bremsflüssigkeit mittels des zugehörigen Auslassventils 106 aus der Radbremse 100 in den Bremsflüssigkeitsbehälter 118 entlassen werden.

Im Hinblick auf die Anforderungen an ein Regelungsverfahren zum Einstellen des geforderten Systemdruckes bedeutet dies, dass für die Druckregelung eine sich ständig ändernde Regelstrecke vorliegt. Je nachdem, wie viele Einlassventile 88 gerade geöffnet sind, ändert sich die Volumenaufnahme und damit die Steifigkeit der Gesamtbremsanlage bzw. des Bremssystems 2. Ist der Druck in einer Radbremse 100 oder mehreren Radbremsen 100 kleiner als der eingestellte im Druckraum 38 und wird nun das der Radbremse 100 zugeordnete Einlassventil 88 geöffnet, um Bremsdruck aufzubauen, so führt der nun vorhandene zusätzliche Volumenbedarf zu einer Reduzierung des Verstärkerdruckes, was durch eine entsprechende Ausgleichsbewegung des Druckkolbens 32 kompensiert werden muss, d. h., der Druckkolben 32 wird ein Stück in Druckaufbaurichtung 44 verschoben, bis wieder der gewünschte Druck im Druckraum 38 erreicht ist. Hinsichtlich des zu betrachtenden Systemdruckreglers führt das oben beschriebene Verfahren des radindividuellen Druckauf- und -abbaus über das Ventilpaar 88, 106 daher zu einer teilweise sehr signifikanten Störanregung.

Um diese Störanregungen zu vermeiden, kann die Solldrehzahl des Aktuators bzw. seine Geschwindigkeit skaliert werden, so dass die Änderungen der Drehzahl geringer ausfallen und somit die Störanregungen geringer ausfallen, da die Solldrehzahl dann nicht so stark in den Regelkreis eingreift.

Erfindungsgemäß ist nun vorgesehen, dass der Skalierungsfaktor unabhängig von der gerade aktivierten Regelfunktion ist und nur auf Grund der Zahl der hydraulisch mit dem Druckraum 38 verbundenen Radbremsen 38 ermittelt wird. Um zu ermitteln, welche Bremse hydraulisch verbunden sind, wird der Zustand des jeweiligen Einlassventils der Radbremse überprüft und/oder der Zustand des jeweiligen Aktuatorzuschaltventils.

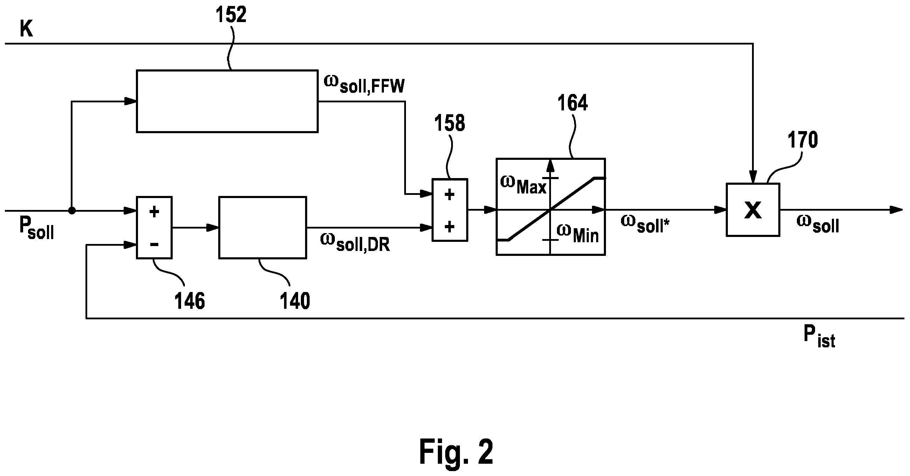

In FIG. 2 ist in einem schematischen Blockschaltbild eine Regelschaltung zur Durchführung einer bevorzugen Ausführung des Verfahrens dargestellt. Eine derartige Regelschaltung ist beispielsweise eine Komponente in einer erfindungsgemäßen Vorrichtung zur Ausführung des Verfahrens. In einem Druckregler 140 wird das Ergebnis einer in einem Subtraktionsglied 146 durchgeführten Subtraktion bzw. die Abweichung $\Delta P = P_{soll}\text{-}P_{ist}$, also die Differenz zwischen dem Drucksollwert $P_{soll}$ und dem Druckistwert $P_{ist}$, zugeführt. Der Ausgangswert des Druckreglers 140 ist der Sollwert für die Aktuatordrehzahl $\omega_{soll, DR}$. Ein Geschwindigkeitsvorsteuerungsberechnungsmodul 152 bestimmt aus dem Drucksollwert $P_{soll}$ durch Differentiation einen weiteren Aktuatordrehzahl-Sollwert, der, mit einem Verstärkungsfaktor gewichtet, einen zusätzlichen Anteil $\omega_{soll, FFW}$ dem Aktuatordrehzahl-Sollwert des Druckreglers 140 $\omega_{soll, DR}$ überlagert. Die beiden Solldrehzahl-Anteile werde in einem Addierer 158 zusammen addiert und einer Begrenzungsfunktion 164 zur Begrenzung auf die minimal bzw. maximal zulässige Solldrehzahl ($\omega_{min}$, $\omega_{max}$) zugeführt. Der aus dieser Operation hervorgehende Wert $\omega_{soll}^{*}$ wird in einem Multiplikationsglied 170 mit dem Skalierungsfaktor K multipliziert; das Ergebnis der Operation ist dann die Aktuatordrehzahl-Sollwert $\omega_{soll}$.

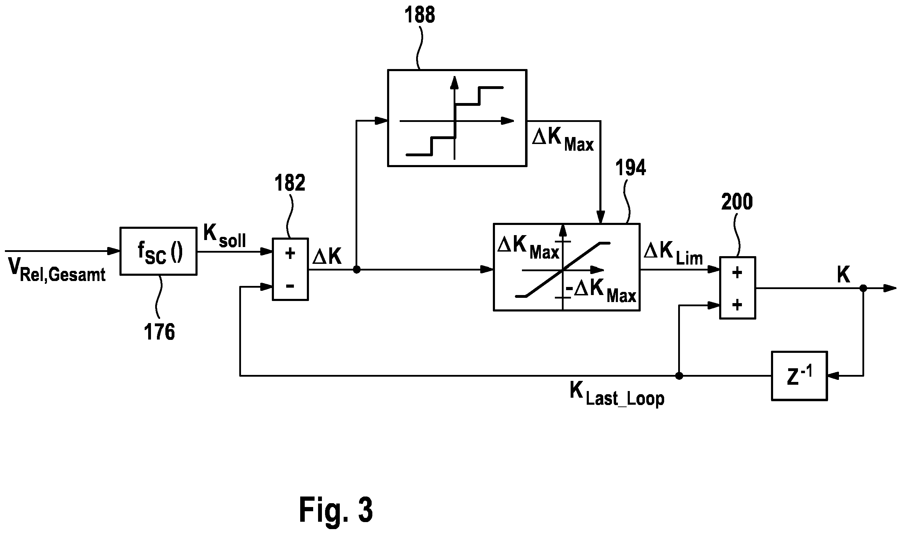

Die FIG. 3 verdeutlicht, wie der Skalierungsfaktor K bestimmt wird. Aus dem Gesamtrelativvolumen $V_{Rel, gesamt}$ wird in einem Berechnungsglied 176 ein Zielwert für den Skalierungsfaktor, nämlich $K_{soll}$, berechnet. In einem Subtraktionsglied 182 wird davon der endgültige Wert des Skalierungsfaktors aus der letzten Iteration, $K_{last\,loop}$, subtrahiert, woraus die Differenz $\Delta K$ der beiden Werte resultiert. Diese Differenz wird dann einem Änderungsbestimmungsmodul 188 zugeführt, welches eine maximale Änderung $\Delta K_{max}$ des Skalierungsfaktors als Funktion der Differenz $\Delta K$ bestimmt. Dies geschieht vorliegend über eine Stufenfunktion, die verschiedenen Wertebereichen der Differenz $\Delta K$ jeweils einen Wert $\Delta K_{max}$ zuordnet. Dadurch wird erreicht, dass bei großen Änderungen von $K_{soll}$ zunächst eine schnellere Nachführung des aktuellen Skalierungsfaktors K an den neuen Zielwert $K_{soll}$ erfolgt. Der ermittele Wert für $\Delta K_{max}$ wird wiederum in einer Begrenzungsfunktion 194 auf einen zulässigen Wertebereich begrenzt, woraus sich der Differenzwert $\Delta K_{lim}$ ergibt, welcher dann in einem Addierer 200 zu dem Skalierungsfaktor K aus der letzten Iteration hinzugefügt wird, woraus sich der aktuelle Skalierungsfaktor K ergibt. Durch diese Maßnahmen wird die Änderung des Skalierungsfaktors K zwischen zwei aufeinanderfolgenden Iterationen begrenzt und somit gewissermaßen gedämpft. Dadurch werden zu starke und plötzliche Änderungen des Skalierungsfaktors K vermieden, so dass Störanregungen, die durch plötzliche Änderungen der Aktuatorsolldrehzahl entstehen, vermieden werden.

Die Festlegung von $\Delta K_{max}$ erfolgt so, dass für eine Verringerung des Skalierungsfaktors, also wenn $K_{soll} < K$, der Wert für K pro Iteration wesentlich schneller an den Zielwert $K_{soll}$ herangeführt wird als dies bei $K_{soll} > K$ der Fall ist, da aufgrund der nun geringeren Anzahl der Radbremsen, die hydraulisch mit dem Linearaktuator verbunden sind, die für den Druckregler zu regelnde Regelstrecke steifer wird.

**Bezugszeichenliste**

| | |
|---|---|
| 2 | Bremssystem |
| 8 | Druckbereitstellungseinrichtung |
| 14 | Aktuator |
| 20 | Elektromotor |
| 32 | Druckkolben |
| 38 | Druckraum |
| 40 | Zylinder-Kolbenanordnung |
| 44 | Druckaufbaurichtung |
| 50 | Ruheposition |
| 56 | Druckposition |
| 58, 64, 66 | Druckposition |
| 62 | Leitung |
| 74 | Leitung |
| 80 | Radbremskreis |
| 88 | Einlassventil |
| 90 | Aktuatorzuschaltventil |
| 92 | Rückschlagventil |
| 94 | Bremsleitung |
| 100 | Radbremse |
| 102 | Steuer- und Regeleinheit |
| 102 | Auslassventil |

| 112 | Abfuhrleitung |
| 118 | Bremsflüssigkeitsbehälter |
| 120 | Leitung |
| 124 | Rückschlagventil |
| 140 | Druckregler |
| 146 | Subtraktionsglied |
| 152 | Geschwindigkeitsvorsteuerungsmodul |
| 158 | Addierer |
| 164 | Begrenzungsfunktion |
| 170 | Multiplikationsglied |
| 176 | Berechnungsglied |
| 182 | Subtraktionsglied |
| 188 | Änderungsbestimmungsmodul |
| 194 | Begrenzungsfunktion |
| 200 | Addierer |

**Patentansprüche**

1. Verfahren zur Regelung eines elektrohydraulischen Bremssystems (2) für Kraftfahrzeuge, welches vorzugsweise in einer "Brake-by-wire"-Betriebsart ansteuerbar ist, mit einer mittels einer elektronischen Steuer- und Regeleinheit (102) ansteuerbaren Druckbereitstellungseinrichtung (8), welche mit hydraulisch betätigbaren Radbremsen (100) verbunden oder verbindbar ist und mittels welcher die Radbremsen (100) über mindestens ein Druckregelventil (88) hydraulisch betätigbar sind, wobei die Druckbereitstellungseinrichtung (8) eine Zylinder-Kolben-Anordnung (40) mit einem hydraulischen Druckraum (38) umfasst, deren Druckkolben (32) durch einen elektromechanischen Aktuator (14) relativ zu einer Ruheposition (50) verschiebbar ist, wobei für jede Radbremse (100) ein Solldruckwert bestimmt ist, wobei die Zylinder-Kolben-Anordnung derart angesteuert wird, dass ein vorbestimmter Vordruck in dem hydraulischen Druckraum durch Verschiebung des Kolbens eingestellt wird, der aus den Solldruckwerten bestimmt wird, und wobei ein Vordruck-Istwert und ein Aktuatorgeschwindigkeit-Istwert ermittelt werden, ein Vordruck-Sollwert bestimmt wird und der Vordruck-Sollwert ($P_{soll}$) und der Vordruck-Istwert ($P_{ist}$) einer Reglervorrichtung als Eingangsgrößen zugeführt werden, welche einen Druckregler und einem dem Druckregler nachgeschalteten Geschwindigkeitsregler umfasst, wobei der Druckregler einen Aktuatorgeschwindigkeit-Sollwert ausgibt und dem Geschwindigkeitsregler als Eingangsgröße ein Aktuatorgeschwindigkeit-Sollwert und der Aktuatorgeschwindigkeit-Istwert zugeführt werden, und wobei der dem Geschwindigkeitsregler zugeführte Aktuatorgeschwindigkeit-Sollwert in Abhängigkeit von der Anzahl der Bremsen modifiziert wird, **dadurch gekennzeichnet, dass** diese Modifizierung in dessen Multiplikation mit einem Skalierungsfaktor (K) besteht und der Skalierungsfaktor (K) ausschließlich von der Anzahl der hydraulisch mit dem hydraulischen Druckraum verbundenen Bremsen abhängt.

2. Verfahren nach Anspruch 1, wobei bei der Bestimmung des Skalierungsfaktors (K) der Volumenanteil der jeweiligen Bremse an einem Gesamtvolumen des Bremssystems berücksichtigt wird.

3. Verfahren nach Anspruch 2, wobei ein Relativvolumen bestimmt wird als Summe von Radbremsenrelativvolumina der einzelnen Radbremsen, und wobei das jeweilige Radbremsenrelativvolumen berechnet wird als Quotient des Radbremsenvolumens der jeweiligen Radbremse mit dem Gesamtvolumen multipliziert mit der Zahl 100, wenn diese Radbremse gerade hydraulisch verbunden ist und ansonsten Null ist, und wobei der Skalierungsfaktor (K) eine Funktion dieses Relativvolumens ist.

4. Verfahren nach Anspruch 3, wobei der Skalierungsfaktor (K) linear von dem Relativvolumen abhängt.

5. Verfahren nach Anspruch 4, wobei der Skalierungsfaktor (K) gemäß

$$K_{soll} = K_{min} + (1 - K_{min}) * V_{rel,\ gesamt}/100$$

bestimmt wird, wobei $K_{min}$ ein minimaler Wert zwischen 0 und 1 ist und $V_{rel}$, gesamt das Relativvolumen bezeichnet.

6. Verfahren nach Anspruch 5, wobei $K_{min}$ zwischen 0.1 und 0.4, insbesondere bei 0.2, liegt.

**7.** Verfahren nach einem der Ansprüche 1 bis 6, wobei der Skalierungsfaktor (K) nach seiner Neuberechnung nicht unmittelbar ersetzt wird, sondern der bisherige Skalierungsfaktor (K) in Richtung des neu berechneten Skalierungsfaktors geändert wird, wobei die maximale Änderung des Skalierungsfaktors (K) von der Differenz zwischen dem bisherigen Skalierungsfaktor und dem neu berechneten Skalierungsfaktor abhängt.

**8.** Verfahren nach einem der Ansprüche 3 bis 7, wobei zur Bestimmung des jeweiligen Radbremsenrelativvolumens der Zustand des jeweiligen Einlassventils und/oder Aktuatorzuschaltventils berücksichtigt wird.

**9.** Verfahren nach einem der Ansprüche 1 bis 8, wobei die Bestimmung des Skalierungsfaktors (K) in regelmäßigen zeitlichen Abständen erfolgt, insbesondere mit einem zeitlichen Abstand zwischen 1 ms und 5 ms.

**10.** Vorrichtung zur Regelung eines elektrohydraulischen Bremssystems (2) mit Mitteln zur Durchführung eines Verfahrens nach einem der Ansprüche 1 bis 9.

**11.** Elektrohydraulisches Bremssystem mit einer Vorrichtung nach Anspruch 10.

**Claims**

**1.** Method for regulating an electrohydraulic brake system (2) for motor vehicles, which can preferably be actuated in a "brake-by-wire" operating mode, having a pressure supply apparatus (8) which can be actuated by means of an electronic open-loop and closed-loop control unit (102) and which is or can be connected to hydraulically activated wheel brakes (100) and by means of which the wheel brakes (100) can be activated hydraulically via at least one pressure regulating valve (88), wherein the pressure supply apparatus (8) comprises a cylinder-piston assembly (40) having a hydraulic pressure chamber (38), the pressure piston (32) of which can be slid relative to a position of rest (50) by an electromechanical actuator (14), wherein a set point pressure value is determined for each wheel brake (100), wherein the cylinder-piston assembly is actuated in such a way that a predetermined pilot pressure, which is determined from the set point pressure values, is set in the hydraulic pressure chamber by sliding the piston, and wherein a pilot pressure actual value and an actuator speed actual value are obtained, a pilot pressure set point value is determined and the pilot pressure set point value ($P_{setp}$) and the pilot pressure actual value (Pact) are fed as input variables to a regulator device which comprises a pressure regulator and a speed regulator which is connected downstream of the pressure regulator, wherein the pressure regulator outputs an actuator speed set point value and an actuator speed set point value and the actuator speed actual value are fed as input variables to the speed regulator, and wherein the actuator speed set point value which is fed to the speed regulator is modified as a function of the number of brakes, **characterized in that** this modification comprises the multiplication of said set point value by a scaling factor (K), and the scaling factor (K) depends exclusively on the number of hydraulic brakes which are connected to the hydraulic pressure chamber.

**2.** Method according to Claim 1, wherein the volume portion of a total volume of the brake system which is made up by the respective brake is taken into account in the determination of the scaling factor (K).

**3.** Method according to Claim 2, wherein a relative volume is determined as a sum of wheel brake relative volumes of the individual wheel brakes, and wherein the respective wheel brake relative volume is calculated as a quotient of the wheel brake volume of the respective wheel brake with the total volume multiplied by the number 100 when this wheel brake is currently hydraulically connected and is otherwise zero, and wherein the scaling factor (K) is a function of this relative volume.

**4.** Method according to Claim 3, wherein the scaling factor (K) depends linearly on the relative volume.

**5.** Method according to Claim 4, wherein the scaling factor (K) is determined according to

$$K_{setp} = K_{min} + (1 - K_{min}) * V_{rel,\ total}/100,$$

wherein $K_{min}$ is a minimum value between 0 and 1, and $V_{rel,total}$ denotes the relative volume.

**6.** Method according to Claim 5, wherein $K_{min}$ is between 0.1 and 0.4, and is, in particular, 0.2.

**EP 3 036 136 B1**

7. Method according to one of Claims 1 to 6, wherein the scaling factor (K) is not replaced immediately after its recalculation but instead the previous scaling factor (K) is changed in the direction of the newly calculated scaling factor, wherein the maximum change in the scaling factor (K) depends on the difference between the previous scaling factor and the newly calculated scaling factor.

8. Method according to one of Claims 3 to 7, wherein the state of the respective inlet valve and/or actuator connection valve is taken into account in order to determine the respective wheel brake relative volume.

9. Method according to one of Claims 1 to 8, wherein the scaling factor (K) is determined at regular time intervals, in particular with a time interval between 1 ms and 5 ms.

10. Device for regulating an electrohydraulic brake system (2) having means for carrying out a method according to one of Claims 1 to 9.

11. Electrohydraulic brake system having a device according to Claim 10.


**Revendications**

1. Procédé de régulation d'un système de freinage électrohydraulique (2) pour des véhicules automobiles, qui peut être commandé de préférence selon le mode de fonctionnement "Brake-by-wire", avec un dispositif de fourniture de pression (8) pouvant être commandé au moyen d'une unité de commande et de régulation électronique (102), qui est ou peut être reliée à des freins de roue actionnables hydrauliquement (100) et au moyen de laquelle les freins de roue (100) peuvent être actionnés hydrauliquement via au moins une soupape de régulation de pression (88), dans lequel le dispositif de fourniture de pression (8) comprend un système de cylindre-piston (40) avec une chambre de pression hydraulique (38), dont le piston de pression (32) peut être déplacé par un actionneur électromécanique (14) par rapport à une position de repos (50), dans lequel une valeur de pression de consigne est déterminée pour chaque frein de roue (100), dans lequel on commande le système de cylindre-piston de telle manière qu'une pression initiale prédéterminée, que l'on détermine à partir des valeurs de pression de consigne, soit établie dans la chambre de pression hydraulique par déplacement du piston, et dans lequel on détermine une valeur réelle de la pression initiale et une valeur réelle de la vitesse de l'actionneur, on détermine une valeur de consigne de la pression initiale, et on envoie la valeur de consigne de la pression initiale ($P_{soll}$) et la valeur réelle de la pression initiale ($P_{ist}$) en tant que grandeurs d'entrée à un dispositif de régulation, qui comprend un régulateur de pression et un régulateur de vitesse placé après le régulateur de pression, dans lequel le régulateur de pression produit une valeur de consigne de la vitesse de l'actionneur et on envoie au régulateur de vitesse, en tant que grandeurs d'entrée, une valeur de consigne de la vitesse de l'actionneur et la valeur réelle de la vitesse de l'actionneur, et dans lequel on modifie la valeur de consigne de la vitesse de l'actionneur envoyée au régulateur de vitesse en fonction du nombre des freins, **caractérisé en ce que** cette modification consiste en sa multiplication avec un facteur d'échelle (K) et le facteur d'échelle (K) dépend exclusivement du nombre des freins reliés hydrauliquement à la chambre de pression hydraulique.

2. Procédé selon la revendication 1, dans lequel on tient compte de la fraction en volume du frein respectif dans un volume global du système de freinage lors de la détermination du facteur d'échelle (K).

3. Procédé selon la revendication 2, dans lequel on détermine un volume relatif comme étant la somme de volumes relatifs de frein de roue des freins de roue individuels, et dans lequel on calcule le volume relatif de frein de roue respectif comme étant le quotient du volume de frein de roue du frein de roue respectif avec le volume global multiplié par le nombre 100, lorsque ce frein de roue est justement relié hydrauliquement et il est par ailleurs zéro, et dans lequel le facteur d'échelle (K) est une fonction de ce volume relatif.

4. Procédé selon la revendication 3, dans lequel le facteur d'échelle (K) dépend linéairement du volume relatif.

5. Procédé selon la revendication 4, dans lequel on détermine le facteur d'échelle (K) suivant

$$K_{soll} = K_{min} + (1 - K_{min}) * V_{rel,total}/100 \; ,$$

dans lequel $K_{min}$ est une valeur minimale comprise entre 0 et 1 et $V_{rel,total}$ désigne le volume relatif.

6. Procédé selon la revendication 5, dans lequel $K_{min}$ se situe entre 0,1 et 0,4, en particulier vers 0,2.

7. Procédé selon l'une quelconque des revendications 1 à 6, dans lequel on ne remplace pas immédiatement le facteur d'échelle (K) après son nouveau calcul, mais on modifie le facteur d'échelle actuel (K) en direction du facteur d'échelle nouvellement calculé, dans lequel la variation maximale du facteur d'échelle (K) dépend de la différence entre le facteur d'échelle actuel et le facteur d'échelle nouvellement calculé.

8. Procédé selon l'une quelconque des revendications 3 à 7, dans lequel on tient compte de l'état de la soupape d'admission respective et/ou de la soupape de connexion de l'actionneur pour la détermination du volume relatif de frein de roue respectif.

9. Procédé selon l'une quelconque des revendications 1 à 8, dans lequel on effectue la détermination du facteur d'échelle (K) à des intervalles de temps réguliers, en particulier avec un intervalle de temps compris entre 1 ms et 5 ms.

10. Dispositif de régulation d'un système de freinage électrohydraulique (2) comprenant des moyens pour la mise en oeuvre d'un procédé selon l'une quelconque des revendications 1 à 9.

11. Système de freinage électrohydraulique comprenant un dispositif selon la revendication 10.

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011076675 A1